# EUROPÄISCHE PATENTSCHRIFT

(11) **EP 2 163 456 B1**
(45) Veröffentlichungstag und Bekanntmachung des Hinweises auf die Patenterteilung: **28.03.2012**
(21) Anmeldenummer: 09009710.6
(22) Anmeldetag: 28.07.2009
(51) Int. Cl.: B62B 3/06, B66F 9/075

(54) **Fahrwerk für ein Flurförderzeug**
Undercarriage for an industrial truck
Châssis pour un chariot de manutention

(30) Priorität: 13.09.2008 DE 102008047022
(43) Veröffentlichungstag der Anmeldung: 17.03.2010
(73) Patentinhaber: Jungheinrich Aktiengesellschaft, 22047 Hamburg (DE)
(72) Erfinder: Draheim, Pierre, 22455 Hamburg (DE); Krenzin, Marcel, 24576 Bad Bramstedt (DE)
(74) Vertreter: Schildberg, Peter

(56) Entgegenhaltungen:
- EP-A1- 0 329 504
- EP-A1- 0 480 817
- EP-A1- 0 670 256
- EP-A2- 0 667 276
- EP-A2- 0 919 404
- DE-A1- 1 906 079
- DE-A1- 4 205 150
- DE-A1- 10 022 400
- DE-A1- 19 753 412
- DE-A1- 19 807 849

## Beschreibung

Die Erfindung bezieht sich auf ein Fahrwerk für ein Flurförderzeug mit einem angetriebenen und gelenkten Antriebsrad und Stützrollen auf jeder Seite des Antriebsrads nach Patentanspruch 1.

Fahrwerke für Flurförderzeuge, bei denen beidseitig eines gelenkten Antriebsrades Stützrollen angeordnet sind, sind in großem Umfang bekannt geworden. Die Stützrollen haben die Aufgabe, das Flurförderzeug zu stabilisieren und zu verhindern, dass es bei Kurvenfahrten oder schiefer Last zum Kippen neigt.

Aus EP 0 670 256 B1 ist ein Hubwagen bekannt geworden, bei dem das Antriebsrad höhenunbeweglich gelagert ist und die Stützrollen zu beiden Seiten des Antriebsrades über Federn abgestützt sind. Die Widerlager der Federn sind über eine Koppelstange miteinander verbunden. Aus EP 0 480 817 B1 ist ferner bekannt, die Stützrollen über eine Koppelstange miteinander zu koppeln und eine zentrale Feder auf die Koppelstange wirken zu lassen. Die Feder wirkt auf einen Arm einer Koppelstange und erzeugt auf diese Weise eine Vorspannung damit einen entsprechenden Anpressdruck am Untergrund.

Aus EP 0 667 276 ist ein Gabelhubwagen bekannt geworden, bei dem der Anpressdruck der Stützräder am Untergrund abhängig gemacht ist von der Position des Mastes. Aus EP 0 919 404 A2 ist bekannt geworden, die Stützräder eines Gabelhubwagens über eine Feder zu beaufschlagen und außerdem der Feder entgegenwirkend ein Gestänge vorzusehen, das mit dem Hubzylinder des Gabelhubwagens gekoppelt ist. Bei steigender Last wird die Wirkung der Federn zunehmend aufgehoben. Dadurch sinkt der Pressdruck der Stützräder am Untergrund. Aus DE 197 53 412, das den nächsten Stand der Technik bildet, ist bekannt geworden, einer Stützrolle eines Gabelhubwagens ein steuerbares Stellorgan zuzuordnen zur Veränderung der Aufstandskraft der Stützrolle. Das Stellorgan wird von einem Betriebsparameter des Gabelhubwagens gesteuert, vorzugsweise dem Hubzylinder, welcher bekanntlich von der Last abhängig ist. Aus DE 198 07 849 ist ebenfalls bekannt, die Stützräder über eine Koppelstange zu koppeln und auf die Koppelstange ein Stellglied wirken zu lassen. Das Stellglied ist in seiner Kraft abhängig von einem Betriebsparameter des Gabelhubwagens, insbesondere dem Druck im Hubzylinder (wenn vorstehend und nachfolgend von Hubzylinder gesprochen wird, dann meint dies, den Freihubzylinder und/oder den Lasthubzylinder).

Aus DE 42 05 150 ist auch bekannt, den Stützrollen von Flurförderzeugen ein Federdämpfungselement zuzuordnen. Es soll Wankbewegungen verhindern.

Aus DE 100 22 400 B4 ist bekannt geworden, mit einer Koppelstange, welche an Armen Stützrollen des Fünfradfahrwerks lagert, ein Dämpferelement zusammenwirken zu lassen. Mit Hilfe eines Dämpferelements wird eine maximale Antriebsradtraktion erhalten bei größtmöglicher Seitenstabilität des Flurförderzeugs. Die Kopplung eines Dämpfers mit der Koppelstange hat zudem den Vorteil, dass das Dämpfungsvermögen nur dem eines einzigen Dämpfers für unabhängige Stützrollen entsprechen muss, wenn sie mit einem Dämpfer versehen wurden. Der Aufwand für den Dämpfer ist daher relativ gering.

Die Erfindung befasst sich mit einem Fahrwerk für Flurförderzeuge, bei denen der Aufstandsdruck des Antriebsrades bzw. der Stützrollen von dem Druck im Hubzylinder abhängig sein soll.

Der Erfindung liegt die Aufgabe zugrunde, ein Fahrwerk für ein Flurförderzeug mit einem angetriebenen und gelenkten Antriebsrad und Stützrollen auf jeder Seite des Antriebsrades, insbesondere eines Fünfradfahrwerks, zu schaffen, das den Einsatz höherer Hydraulikdrücke für einen mit einem Stützzylinder für das Antriebsrad und/oder die Stützrollen verbundenen Hubzylinder ermöglicht bei ausreichendem Dämpfungsvermögen für das Antriebsrad bzw. die Stützrollen.

Diese Aufgabe wird durch die Merkmale des Patentanspruchs 1 gelöst.

Bei dem erfindungsgemäßen Fahrwerk ist in der Hydraulikleitung ein Druckverhältnisventil, ein Druckregelventil oder ein Druckgefälleventil geschaltet. Nach einer Ausgestaltung der Erfindung ist in der Zuleitung zum Stützzylinder oder der Rückleitung vom Stützzylinder eine Drossel angeordnet.

Unter einem Druckregelventil oder einem Druckminderventil wird bekanntlich ein Ventil verstanden, das den Druck am Ablauf (am Ausgang) unabhängig vom höheren Druck im Zulauf bzw. am Eingang (zum Beispiel Speicher) konstant hält. Ein Druckgefälleventil ist ein Ventil, das den Druck vom Zulauf zum Ablauf um einen gleich bleibenden Betrag vermindert. Das Druckgefälleventil ist alternativ ein Ventil, das den Druck zwischen Steuerleitung und Hauptleitung in einer konstanten Differenz hält. Ein Druckverhältnisventil schließlich ist ein Ventil, das den Druck vom Eingang zum Ausgang in einem konstanten Verhältnis vermindert. Wahlweise hält es den Druck zwischen Steuerleitung und Hauptleitung in einem konstanten Verhältnis.

Die Erfindung ermöglicht, dass eine Hydraulikversorgung, die sowohl den oder die Hubzylinder der Lasthubeinrichtung als auch einen oder mehrere Stützzylinder im Fahrwerk bedient, mit hohen Drücken arbeiten kann. Hohe Drücke haben den Vorteil, dass der Kolbendurchmesser des Hubzylinders stark verringert werden kann. Dadurch verringern sich seine Baumaße, und das Flurförderzeug kann kompakter gebaut werden. Ferner ist die zu fördernde Hydraulikölmenge geringer. Gleichwohl kann bei der Erfindung dafür gesorgt werden, dass der Kolben des Stützzylinders ausreichend stabil und somit knickfest bleibt. Ferner ist sichergestellt, dass eine ausreichende Dämpfung für das abgestützte Rad erzielt werden kann. Mit Hilfe der beschriebenen Ventile lässt sich der Druck im Hubzylinder auf einen gewünschten kleineren Druck am Stützzylinder transformieren, wobei eine Abhängigkeit des Drucks am Stützzylinder vom Druck im Hubzylinder nach wie vor besteht. Bei gleichen Kolbenabmessungen im Stützzylinder wie im Stand der Technik ist dann bei deutlich höheren Drücken im Lasthubzylinder ein ausreichend großer Hubweg für das abgestützte Rad gewährleistet und ein ausreichendes Volumen, das bei einer Relativverstellung von Chassis und abgestütztem Rad die Drossel durchströmt. Definierte Schwenkbewegungen in der Fahrzeugachse benötigen große Hubwege, welche bei einem hohen Druck am Stützzylinder nicht realisierbar sind. Bei der Erfindung kann der Kolbendurchmesser des Stützzylinders unabhängig von der Lasthubhydraulik gewählt werden, weil sein Eingangsdruck bedarfsgerecht geregelt ist.

Die erfindungsgemäße Lösung ist sowohl für die Stützräder eines Fahrwerks als auch für die Antriebsräder, die von einer Stützhydraulik abgestützt sind, geeignet. Besonders vorteilhaft ist die Anwendung der erfindungsgemäßen Stützhydraulik auf eine Koppelstange, die im Chassis des Flurförderzeugs horizontal schwenkbar gelagert ist und über Lagerarme die Stützrollen lagert.

Nach einer weiteren Ausgestaltung der Erfindung wirkt mit dem Stützzylinder bzw. der Koppelstange eine Feder zusammen. Die Feder kann zum Beispiel in den Stützzylinder integriert werden oder auch separat zur Anwendung gelangen, beispielsweise als Torsionsfeder, wie in DE 100 22 400 B4 offenbart.

Die Erfindung wird nachfolgend anhand eines in einer Zeichnung dargestellten Ausführungsbeispieles näher erläutert.

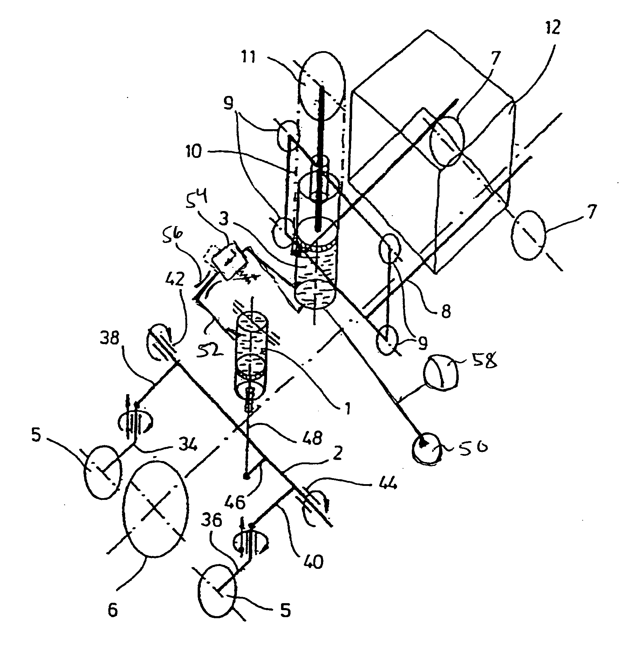

Die einzige Figur zeigt schematisch ein Fünfradfahrwerk eines Gabelhubwagens nach der Erfindung.

In der Figur erkennt man ein Antriebsrad 6 eines im Einzelnen nicht dargestellten Hubwagens, das von einem geeigneten nicht dargestellten Fahrmotor antreibbar ist und auch als gelenktes Rad wirkt. Auch die Lenkung ist fortgelassen. Das Antriebsrad 6 ist am Chassis des Hubwagens gelagert. Auf der Achse des Antriebsrades 6 sind zwei Stützrollen 5 vorgesehen, welche an Lagerbauteilen 34, 36 gelagert sind, die ihrerseits um Arme 38, 40 schwenkbar sind, die starr mit einer Koppelstange 2 verbunden sind. Die Koppelstange 2 ist bei 42 und 44 um eine horizontale Achse drehbar gelagert. Sie weist einen Arm 46 zwischen den Enden auf, der mit einer Stange 48 eines Stützzylinders 1 verbunden ist. Der Stützzylinder stützt sich am Rahmen des Hubwagens ab. Mit Hilfe des Stützzylinders 1 kann ein Drehmoment auf die Koppelstange 2 ausgeübt werden, wodurch der Aufstandsdruck der Stützräder 5 auf dem Untergrund beeinflussbar ist.

Ein Lastschlitten 8 des Flurförderzeugs trägt eine Last 12. Beidseits des Lastschlittens 8 sind nicht gezeigte Radarme vorgesehen mit Lasträdern 7, wie für ein Fünfradfahrwerk allgemein bekannt. Die Lastgabel ist mittels Führungsrollen 9 in einem nicht näher dargestellten Hubmast höhenverstellbar geführt. Sie wird über eine Hubkette 10 von einem Lasthubzylinder 3 betätigt. Die Hubkette 10 ist über eine Kettenrolle 11 geführt.

Zum Anheben des Lastschlittens 8 wird mit Hilfe einer Hydraulikpumpe 50 Hydraulikmedium in den Lasthubzylinder 3 gefördert, so dass der Kolben des Lasthubzylinders 3 den Schlitten 8 anheben kann. Die Steuerung der Hydraulikversorgung des Lasthubzylinders 3 ist nicht weiter gezeigt.

Wie in der Figur ferner zu erkennen, ist zwischen dem Lasthubzylinder 3 und dem Stützzylinder 1 eine Leitung 52 angeordnet. In der Leitung sind ein Druckminderventil 54 sowie eine Drossel 56 geschaltet. Das Druckminderventil 54 sorgt dafür, dass am Ausgang des Ventils 54 bzw. am Eingang des Stützzylinders 1 ein gegenüber dem Druck im Lasthubzylinder 3 reduzierter Druck ansteht. Das durch die Leitung 52 strömende Volumen wird durch die Drossel 56 gedrosselt. Die Drossel bewirkt mithin eine Dämpfung der Stützräder 5 bei ihrer Auslenkung, wobei die Stützkraft auf den Stützrädern 5 von der Höhe der Last 12 abhängig ist. Werden die Stützrollen beispielsweise beim Überfahren einer Erhebung oder beim Durchfahren einer Kurve ausgelenkt, fährt der Kolben des Stützzylinders um ein entsprechendes Maß ein. Dadurch wird entweder der Kolben des Lasthubzylinders 3 entsprechend verstellt oder aber ein Druckspeicher 50 nimmt das hierbei aus dem Stützzylinder 1 verdrängte Volumen auf.

Damit bei einem Einfahren der Stützrollen 5 diese in eine Ausgangsposition zurückverstellt werden bzw. ein entsprechendes Aufrichtvermögen bei einer Verschwenkung des Flurförderzeugs um die Lenkachse erzeugt wird, wird entweder der Koppelstange 2 oder dem Stützzylinder 1 eine Feder zugeordnet, wie dies an sich bekannt ist, beispielsweise aus DE 100 22 400 B4. Während im Stand der Technik eine Federdämpfungseinheit an der Koppelstange bzw. an den Stützrädern angreift, dient für die Dämpfung der Aufhängung der Stützräder die Drossel 56 in der Verbindungsleitung 52 zwischen Lasthubzylinder 3 und Stützzylinder 1. Der Stützzylinder 1 kann so ausgelegt werden, dass bei seiner Auslenkung, etwa beim Einfahren der Stützrollen ausreichend Volumen verdrängt wird, um eine gewünschte Dämpfungswirkung zu entfalten.

Bei einem Ventil in der Leitung 52, das den Durchfluss nur in einer Richtung zulässt, müssen Mittel vorgesehen werden, die den Fluss auch in der entgegengesetzten Richtung ermöglichen.

## Patentansprüche

1. Fahrwerk für ein Flurförderzeug, mit einem angetriebenen und gelenkten Antriebsrad (8) und Stützrollen (5) auf jeder Seite des Antriebsrades, wobei die Stützrollen und/oder das Antriebsrad mittels eines sich am Chassis des Flurförderzeugs abstützenden Stützzylinders (1) gegen den Untergrund andrückbar sind/ist, mit einem Hubzylinder (3) für ein Lastaufnahmemittel und einer Hydraulikleitung (52) zwischen dem Hubzylinder (3) und dem Stützzylinder (1), **dadurch gekennzeichnet, dass** in der Hydraulikleitung (52) ein Druckverhältnisventil, ein Druckregelventil (54) oder ein Druckgefälleventil geschaltet ist.

2. Fahrwerk nach Anspruch 1, **dadurch gekennzeichnet dass** in der Zuleitung zum Stützzylinder (1) oder Rückleitung vom Stützzylinder eine Drossel (56) angeordnet ist.

3. Fahrwerk nach Anspruch 1 oder 2, **dadurch gekennzeichnet, dass** der Stützzylinder (1) auf eine Koppelstange (2) wirkt, die im Chassis des Flurförderzeugs horizontal schwenkbar gelagert ist und über Lagerarme (38, 40) die Stützrollen (5) lagert.

## Claims

1. An undercarriage for an industrial truck with a driven and steered drive wheel (8) and support rollers (5) on each side of the drive wheel, wherein the support rollers and/or the drive wheel can be pressed against the ground by means of a support cylinder (1) supported at the chassis of the industrial truck, with a lift cylinder (3) for a load receiving means and a hydraulic line (52) between the lift cylinder (3) and the support cylinder (1), **characterized in that** a proportioning pressure vale, a pressure control valve (54) or a pressure gradient valve is connected in the hydraulic line (52).

2. The undercarriage according to claim 1, **characterized in that** a throttle (56) is disposed in the feed line to the support cylinder (1) or the return line from the support cylinder.

3. The undercarriage according to claim 1 or 2, **characterized in that** the support cylinder (1) acts on the coupling rod (2), which is horizontally supported in the chassis of the industrial truck so as to be pivotable, and supports the support rollers (5) via bearing arms (38, 40).

## Revendications

1. Châssis pour un chariot de manutention comprenant une roue d'entraînement entraînée et articulée (8) et des rouleaux d'appui (5) de chaque côté de la roue d'entraînement, dans lequel les rouleaux d'appui et/ou la roue d'entraînement peuvent/peut s'appuyer sur le fond au moyen d'un cylindre d'appui (1) s'appuyant sur le châssis du chariot de manutention, comprenant un cylindre de levage (3) pour un moyen de réception de charge et une conduite hydraulique (52) entre le cylindre de levage (3) et le cylindre d'appui (1), **caractérisé en ce qu'**une soupape de rapport de compression, un régulateur de pression (54) ou un régulateur différentiel de pression est monté(e) dans la conduite hydraulique (52).

2. Châssis selon la revendication 1, **caractérisé en ce qu'**un étranglement (56) est disposé dans la conduite d'amenée vers le cylindre d'appui (1) ou la conduite de retour depuis le cylindre d'appui.

3. Châssis selon la revendication 1 ou 2, **caractérisé en ce que** le cylindre d'appui (1) agit sur une tige de liaison (2) qui est logée dans le châssis du chariot de manutention de manière à pouvoir pivoter horizontalement et loge les rouleaux d'appui (5) par le biais de bras de support (38, 40).
